# EUROPEAN PATENT SPECIFICATION

(11) **EP 1 424 010 B1**
(45) Date of publication and mention of the grant of the patent: **09.01.2013**
(21) Application number: 03078609.9
(22) Date of filing: 14.11.2003
(51) Int. Cl.: A21C 11/22

(54) **Process for the preparation of edible pasta with a high absorption of substances, a relative dough processing device and the pasta thus obtained**
Verfahren zur Herstellung von essbaren Teigwaren mit hoher Absorption von Substanzen, entsprechende Teigbearbeitungsmaschine und damit hergestellte Teigwaren
Procédé de préparation de pâte alimentaire à haute capacité d'absorption de substances, dispositif de traitement de pâte correspondant et pâte ainsi obtenue

(30) Priority: 20.11.2002 IT MI20022465
(43) Date of publication of application: 02.06.2004
(73) Proprietor: Pastificio Rana S.p.A., 37057 San Giovanni Lupatoto (Verona) (IT)
(72) Inventor: Rana, Giovanni, 37057 San Giovanni Lupatoto (Verona) (IT)
(74) Representative: Lissandrini, Marco

(56) References cited:
- EP-A1- 0 743 018
- EP-A1- 1 275 303
- WO-A-93/02561
- WO-A-98/47393
- DE-A1- 4 100 042
- DE-A1- 19 757 866
- FR-A1- 2 788 405
- JP-A- 2000 060 470
- US-A- 4 717 328
- US-A- 5 402 715

## Description

The present invention relates to a process for the preparation of pasta with a high absorption of substances, a relative dough processing device and the pasta thus obtained.

A fundamental quality of pasta, strictly correlated with the customer's acceptance of the product, is its capacity of absorbing as high a quantity as possible of substances, such as dressings, sauces, etc. Furthermore, the reduction of the cooking time to extremely short periods of about a minute, linked to the capacity of rapidly absorbing water during the cooking, is also extremely important.

The above demands refer to several types of pasta, such as, for example, smooth or filled, fresh or dry pasta, produced by extrusion or lamination as explained and disclosed in the documents DE 4100042 and EP 0 743018.

The solutions so far adopted for attempting to improve the absorption quality of sauces and other dressings, as well as the cooking water of the pasta, have numerous drawbacks, among which the fact that they can only be applied to extruded pasta.

Instead of the common Teflon die-plates, bronze die-plates have been used, whose surface roughness gives the surface of the extruded pasta a greater porosity making it rougher and consequently more suitable for withholding dressings.

The increased capacity of extruded pasta for absorbing dressings with the use of bronze die-plates is obtained, however, to the detriment of the production rate, which can be reduced to an unacceptable level.

The greater translation resistance, in fact, caused by the surface roughness, leads to an increase in the operating pressure reducing the productivity even by as much as 20-40%.

Furthermore, in the case of the production of dry pasta by extrusion with a bronze die-plate, it is necessary to add about 1-3% of water, causing a greater energy waste in the subsequent drying phase.

Extruded pasta with a high absorption capacity of dressings, has also been obtained by means of more complex die-plates, equipped with chambers which create vortexes and "tearing" of the dough at the moment of extrusion. In order to ensure that the pasta thus extruded has a surface suitable for rapidly absorbing dressings, at the outlet of the die-plate, the dough is subjected to powerful jets of hot air which solidify the surface roughness due to the stretching.

An objective of the present invention is to provide a process for the preparation of pasta with a high absorption of substances.

Another objective is to provide a dough processing device to produce extruded or laminated pasta with a high absorption of substances and rapid cooking time.

A further objective of the present invention is to produce pasta having a homemade appearance.

An additional objective of the present invention is to provide a process which solves the above drawbacks.

Yet another objective of the present invention is to provide a process and device for the preparation of pasta with a high absorption of substances which are particularly simple and functional, with reduced costs.

These objectives according to the present invention are achieved by providing a process and device for the preparation of pasta and the pasta obtained thereby as specified in the independent claims.

Further characteristics are included in the dependent claims.

The characteristics and advantages of a process for the preparation of pasta with a high absorption of substances, a relative dough processing device and the pasta thus obtained according to the present invention will appear more evident from the following illustrative but non-limiting description, referring to the schematic drawings enclosed, in which:
figure 1 is a block scheme of a process for the preparation of pasta with a high absorption of substances, according to the present invention,
figures 2 and 3 schematically show a dough processing device for the production of edible pasta with a high absorption of substances, associated downstream with an extrusion apparatus and a lamination apparatus, respectively.
figure 4 is an enlarged perspective view of a portion of pasta cut with streaks according to the present invention.

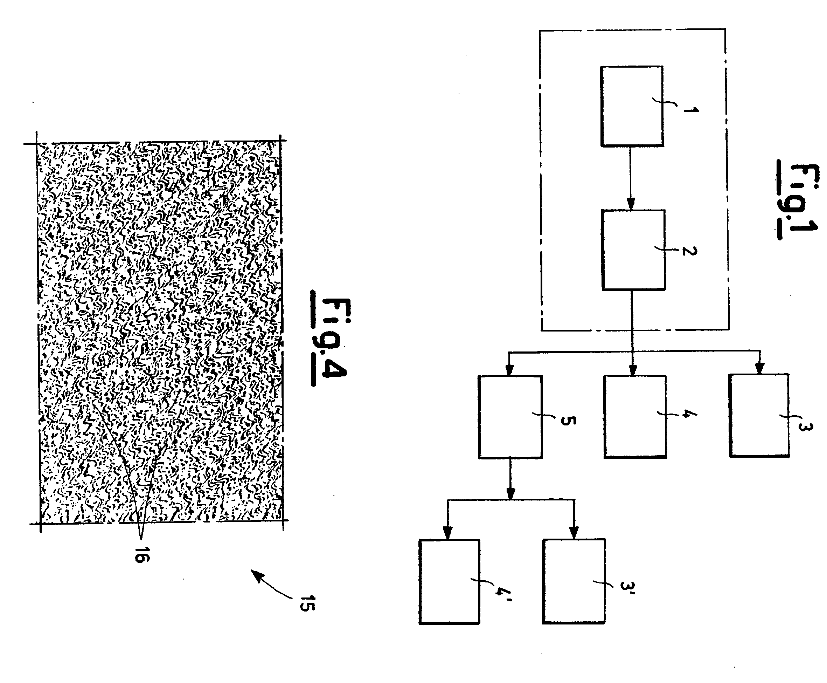

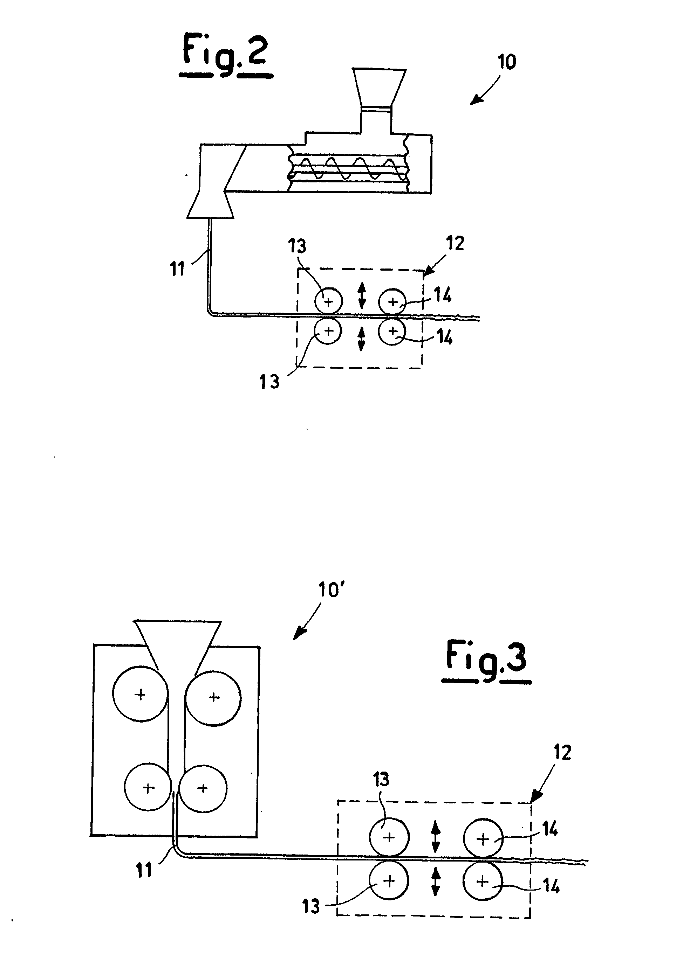

With reference to the figures, these illustrate in general by means of a block scheme, a process for the preparation of pasta with a high absorption of substances (figure 1), object of the present invention, together with a relative dough processing device, associated downstream with a pasta extrusion line schematized in figure 2 or a pasta lamination line schematized in figure 3.

The process for the preparation of pasta with a high absorption of substances, according to the invention, firstly comprises the formation of a sheet of edible dough 11, for example by means of a dough sheet production group, for example comprising an extruder 10 or, alternatively, a lamination apparatus 10'.

After the formation of the sheet of dough 11, the process, object of the present invention, comprises cutting incision of the sheet on at least one side, or cutting incision of the sheet on both sides. The cutting incision preferably has distinct edges and relates to a part of the thickness of the sheet, creating a series of streaks 16, uniformly distributed on the whole surface of the sheet, having a random and irregular pattern to simulate a homemade appearance in the pasta produced. Figure 4 indicates, as a non-limiting example, an enlargement of a portion 15 of the incised sheet.

The depth of the clear cutting incisions, which relate to a part of the thickness of the sheet, obviously depends on said thickness as well as the type of dough and/or its egg content.

Deeper cutting incisions would, in fact, cause the breakage of the sheet and thinner cutting incisions would not be stable with time and, in particular, would not be maintained during the cooking, in order to favour the absorption first of the cooking water and subsequently of the dressing or other aromatizing substances.

The incision is effected with a roll incision device 12 situated downstream of the dough sheet producing group, for example of the extrusion die-plate 10 or lamination device 10'. In a preferred embodiment, shown in the figures for purely illustrative purposes, the incision device 12 comprises a first pair of lamination rolls 13 made of stainless steel or another material suitable for the food industry for calibrating the sheet 11 and a second pair of cutting incision rolls 14, also made of stainless steel or another material suitable for the food industry. At least one roll 14 of the pair of cutting incision rolls, but preferably both rolls 14, are equipped on the surface with a series of repeated crests and hollows, for example following a random pattern or design. The surface design of the roll 14, pressed on the sheet of dough 11, creates streaks 16 according to the present invention.

The height of the crests with respect to the bottom of the hollows, which causes the depth of the cutting incisions to be obtained in the thickness of the pasta, for a thickness of pasta ranging from about 0.4 mm to 30 mm, ranges for example from 1 mm to 0.05 mm, and in particular preferably from 0.2 mm to 0.4 mm.

The pair of incision rolls 14 presses the sheet of dough 11, causing its possible lamination, but above all cutting the dough according to the pattern appearing on the surface of the incision rolls 14.

In order to optimize the cutting incision phase of the sheet of dough, and obtain finished products with a high absorption of dressings, the reduction ratio of the thickness of the sheet of dough 11 obtained with the passage through the cutting incision rolls, whose reciprocal distance can be advantageously regulated, is maintained within the range of 1 to 10, and in particular within the range of 1.5 to 2.5.

Figure 1 schematically illustrates the main process phases for the preparation of pasta with a high absorption of substances, according to the invention.

A first formation phase 1 of a sheet of dough, for example by lamination or extrusion, and a second cutting incision phase 2 of the sheet of dough, generally followed by a pasteurization phase with vapour 3, lead to the production of fresh smooth pasta with a high absorption of substances, according to the invention.

A subsequent optional drying phase 4, as an alternative to the pasteurization 3, produces dry smooth pasta with a high absorption of substances.

Furthermore, according to what is schematized in figure 1, the process, object of the present invention, is also suitable for the production of filled pasta with a high absorption of substances, for example "tortellini" or "ravioli", both fresh and dry, by adding, after the cutting incision phase 2, a forming phase 5, i.e. feeding phase to the "tortellini-machine" or "ravioli-machine", respectively, possibly followed by a pasteurization phase with vapour 3' or drying phase 4'.

The process for the preparation of edible pasta with a high absorption of substances and the relative dough processing device, object of the present invention, have the advantage of being able to be used both for extruded types of pasta and laminated types of pasta.

The edible pasta with a high absorption of substances thus obtained, advantageously has a homemade appearance.

Numerous modifications and variants can be applied to the process for the preparation of edible pasta with a high absorption of substances and the relative dough processing device. Furthermore all the details can be substituted by technically equivalent elements and the materials used can vary according to technical demands.

## Claims

1. A process for the preparation of edible pasta with a high absorption of substances, comprising at least a formation phase of a sheet of dough (11) and a cutting incision phase of said sheet on at least one side, said cutting incision creating a series of streaks (16) on the surface of said sheet (11) and having a depth which relates to part of the thickness of the sheet (11), wherein said streak (16) are repeated irregularly and at random.

2. The process according to claim 1, **characterized in that** said incision phase is effected by lamination.

3. The process according to claims 1 or 2, **characterized in that** said cutting incision phase by lamination is effected with a pair of cutting incision rolls (14), at least one of said cutting incision rolls (14) being equipped on the surface with a series of crests and hollows.

4. The process according to claim 1, **characterized in that** said incision phase is preceded by a calibrating phase, effected by the passage of said sheet of dough (11) between a pair of lamination rolls (13) with a smooth outer surface.

5. The process according to claim 2, **characterized in that** the reduction ratio of the thickness of the sheet of dough (11) obtained with said incision phase by lamination is maintained within a range of 1 to 10.

6. The process according to claim 5, **characterized in that** said reduction ratio is maintained within a range of 1.5 to 2.5.

7. The process according to claim 1, **characterized in that** it comprises subsequent dying phases of the pasta or pasteurization and/or forming phases of filled pasta.

8. The process according to claim 1, **characterized in that** said incisions are effected on a sheet of dough (11) having a thickness ranging from 0.4 mm to 30 mm for a depth ranging from 1 mm to 0.05 mm.

9. The process according to claim 8, **characterized in that** said depth of the incisions ranges from 0.2 mm to 0.4 mm.

10. A processing device of edible pasta with a high absorption of substances associated downstream with a dough sheet producing group (10, 10'), comprising at least one pair of cutting incision rolls (14), at least one of said cutting incision rolls (14) being equipped on the surface with a series of crests and hollows, so as to create a series of streaks,
wherein said crests and hollows are repeated according to a random pattern or design.

11. The device according to claim 10, **characterized in that** said crests have, with respect to the bottom of said hollows, a height ranging from 1 mm to 0.05 mm.

12. The device according to claim 11, **characterized in that** the height of said crests ranges from 0.2 mm to 0.4 mm.

13. The device according to claim 10, **characterized in that** said cutting incision rolls (14) have an adjustable distance.

14. The device according to claim 10, **characterized in that** it comprises a pair of lamination rolls (13), situated before the cutting incision rolls (14) and having a smooth outer surface for the calibration of the sheet (11).

15. The device according to claims 10 or 14, **characterized in that** said rolls (13, 14) are made of stainless steel or another material suitable for the food industry.

16. Edible pasta with a high absorption of substances obtained by means of the process and device according to the previous claims.

## Patentansprüche

1. Verfahren zur Herstellung von essbaren Teigwaren mit hoher Absorption von Substanzen, umfassend mindestens eine Bildungsphase einer Teigplatte (11) und eine Phase des einschneidenden Einschlitzens der Platte auf mindestens einer Seite, wobei das einschneidende Einschlitzen auf der Oberfläche der Platte (11) eine Reihe von Streifen (16) erzeugt und aufweisend eine Tiefe, die einem Teil der Stärke der Platte (11) entspricht, wobei die Streifen (16) unregelmäßig und zufällig wiederholt werden.

2. Verfahren nach Anspruch 1, **dadurch gekennzeichnet, dass** die Phase des einschneidenden Einschlitzens durch Laminierung ausgeführt wird.

3. Verfahren nach Anspruch 1 oder 2, **dadurch gekennzeichnet, dass** die Phase des einschneidenden Einschlitzens durch Laminierung mit einem Paar einschneidender Einschlitzwalzen (14) ausgeführt wird, wobei mindestens eine der einschneidenden Einschlitzwalzen (14) auf der Oberfläche mit einer Reihe von Kuppen und Wannen ausgestattet ist.

4. Verfahren nach Anspruch 1, **dadurch gekennzeichnet, dass** der Einschlitzphase eine Kalibrierungsphase vorausgeht, die durch den Durchlauf der Teigplatte (11) zwischen einem Paar Laminierwalzen (13) mit einer glatten Außenfläche ausgeführt wird.

5. Verfahren nach Anspruch 2, **dadurch gekennzeichnet, dass** das Verkleinerungsverhältnis der Stärke der durch die Einschlitzphase durch Laminierung erhaltenen Teigplatte (11) in einem Intervall von 1 bis 10 aufrechterhalten wird.

6. Verfahren nach Anspruch 5, **dadurch gekennzeichnet, dass** das Verkleinerungsverhältnis in einem Intervall von 1,5 bis 2,5 aufrechterhalten wird.

7. Verfahren nach Anspruch 1, **dadurch gekennzeichnet, dass** es aufeinanderfolgende Trocknungsphasen der Teigwaren oder Pasteurisierungs- und/oder Bildungsphasen gefüllter Teigwaren umfasst.

8. Verfahren nach Anspruch 1, **dadurch gekennzeichnet, dass** die Einschlitzungen auf einer Teigplatte (11), aufweisend eine Stärke von 0,4 mm bis 30 mm, mit einer Tiefe von 1 mm bis 0,05 mm ausgeführt werden.

9. Verfahren nach Anspruch 8, **dadurch gekennzeichnet, dass** die Tiefe der Einschlitzungen von 0,2 mm bis 0,4 mm reicht.

10. Maschine zur Bearbeitung essbarer Teigwaren mit einer hohen Absorption von Substanzen, die nachgeordnet an eine Teigplatten-Produktionsgruppe (10, 10') anschließt, umfassend mindestens ein Paar einschneidender Einschlitzwalzen (14), wobei mindestens eine der einschneidenden Einschlitzwalzen (14) auf der Oberfläche mit einer Reihe von Kuppen und Wannen ausgestattet ist, um eine Reihe von Streifen zu bilden, wobei die Kuppen und Wannen gemäß einer zufälligen Struktur oder einem zufälligen Muster wiederholt werden.

11. Maschine nach Anspruch 10, **dadurch gekennzeichnet, dass** die Kuppen im Bezug auf die Sohle der Wannen eine Höhe zwischen 1 mm und 0,05 mm aufweisen.

12. Maschine nach Anspruch 11, **dadurch gekennzeichnet, dass** die Höhe der Kuppen von 0,2 mm bis 0,4 mm reicht.

13. Maschine nach Anspruch 10, **dadurch gekennzeichnet, dass** die einschneidenden Einschlitzwalzen (14) einen verstellbaren Abstand aufweisen.

14. Maschine nach Anspruch 10, **dadurch gekennzeichnet, dass** sie ein Paar Laminierwalzen (13) aufweist, die vor den einschneidenden Einschlitzwalzen (14) liegen und eine glatte Außenfläche für die Kalibrierung der Platte (11) aufweisen.

15. Maschine nach den Ansprüchen 10 oder 14, **dadurch gekennzeichnet, dass** die Walzen (13, 14) aus Edelstahl oder einem anderen Material sind, das für die Lebensmittelindustrie geeignet ist.

16. Essbare Teigwaren mit hoher Absorption von Substanzen, die mithilfe des Verfahrens und der Maschine nach den vorangehenden Ansprüchen erhalten wurden.

## Revendications

1. Procédé de préparation de pâte alimentaire à haute capacité d'absorption de substances, comprenant au moins une phase de formation d'une feuille de pâte (11) et une phase d'incision de découpage de ladite feuille sur au moins un côté, ladite incision de découpage créant une série de stries (16) sur la surface de ladite feuille (11) et comportant une profondeur qui occupe une partie de l'épaisseur de la feuille (11), lesdites stries (16) se répètent irrégulièrement et fortuitement.

2. Procédé selon la revendication 1, **caractérisé en ce que** ladite phase d'incision se fait par laminage.

3. Procédé selon les revendications 1 ou 2, **caractérisé en ce que** ladite phase d'incision de découpage par laminage se fait avec une paire de rouleaux d'incision de découpage (14), au moins l'un desdits rouleaux d'incision de découpage (14) étant équipé en surface d'une série de saillies et de creux.

4. Procédé selon la revendication 1, **caractérisé en ce que** ladite phase d'incision est précédée par une phase de calibrage, réalisée par le passage de ladite feuille de pâte (11) entre une paire de rouleaux de laminage (13) présentant une surface extérieure lisse.

5. Procédé selon la revendication 2, **caractérisé en ce que** le taux de réduction de l'épaisseur de la feuille de pâte (11), obtenu lors de ladite phase d'incision par laminage, se situe dans un intervalle de 1 à 10.

6. Procédé selon la revendication 5, **caractérisé en ce que** ledit taux de réduction se situe dans un intervalle de 1,5 à 2,5.

7. Procédé selon la revendication 1, **caractérisé en ce qu'**il comprend des phases de séchage successives de la pâte ou des phases de pasteurisation et/ou de formage de la pâte remplie.

8. Procédé selon la revendication 1, **caractérisé en ce que** lesdites incisions se font sur une feuille de pâte (11) présentant une épaisseur allant de 0,4 mm à 30 mm et une profondeur allant de 1 mm à 0,05 mm.

9. Procédé selon la revendication 8, **caractérisé en ce que** ladite profondeur des incisions va de 0,2 mm à 0,4 mm.

10. Dispositif de traitement de pâte alimentaire à haute capacité d'absorption de substances associé en aval à un groupe de production de feuilles de pâte (10, 10'), comprenant au moins une paire de rouleaux d'incision de découpage (14), au moins l'un desdits rouleaux d'incision de découpage (14) étant équipé en surface d'une série de saillies et de creux, de sorte à créer une série de stries, **caractérisé en ce que** lesdites saillies et lesdits creux se répètent selon un schéma ou dessin fortuits.

11. Dispositif selon la revendication 10, **caractérisé en ce que** lesdites saillies ont, par rapport à la base desdits creux, une hauteur allant de 1 mm à 0,05 mm.

12. Dispositif selon la revendication 11, **caractérisé en ce que** la hauteur desdites saillies va de 0,2 mm à 0,4 mm.

13. Dispositif selon la revendication 10, **caractérisé en ce que** lesdits rouleaux d'incision de découpage (14) ont une distance réglable.

14. Dispositif selon la revendication 10, **caractérisé en ce qu'**il comprend une paire de rouleaux de laminage (13), situés avant les rouleaux d'incision de découpage (14) et présentant une surface extérieure lisse pour le calibrage de la feuille (11).

15. Dispositif selon les revendications 10 ou 14, **caractérisé en ce que** lesdits rouleaux (13, 14) sont fabriqués en acier inoxydable ou dans une autre matière appropriée à l'industrie alimentaire.

16. Pâte alimentaire à haute capacité d'absorption de substances obtenue au moyen du procédé et du dispositif selon les revendications précédentes.
